(19) Europäisches Patentamt
European Patent Office
Office européen des brevets

(11) Publication number: **0 064 374 A2**

# (12) EUROPEAN PATENT APPLICATION

(21) Application number: 82302117.5

(22) Date of filing: 26.04.82

(51) Int. Cl.$^3$: B 32 B 27/42
E 04 B 1/76

(30) Priority: 06.05.81 US 260945

(43) Date of publication of application: 10.11.82 Bulletin 82/45

(84) Designated Contracting States: BE CH DE FR GB IT LI NL SE

(71) Applicant: Exxon Research and Engineering Company
P.O.Box 390 180 Park Avenue
Florham Park New Jersey 07932(US)

(72) Inventor: Patton, LeMarre Tad
5010 Glen Haven Drive
Baytown Texas(US)

(74) Representative: Northover, Robert Frank et al,
Esso Chemical Research Centre P.O. Box 1
Abingdon Oxfordshire, OX13 6BB(GB)

## (54) Method of insulating and insulating structure.

(57) An insulating structure, such as a laminate consisting of non-cellular film of about £ mil to 10 mil thickness of a polymer of the structure:

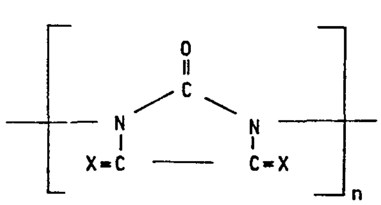

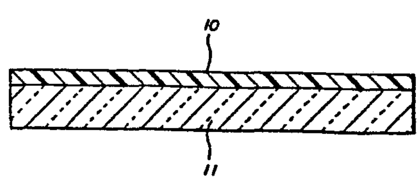


wherein X is O or NH, provided at least one X is O, such as poly(parabanic acids) bonded to a second material such as glass, wood, metal, paper, asbestos or a polymeric material. Also disclosed is a method of insulating an area comprising positioning such a structure adjacent to said structure.

EP 0 064 374 A2

"Method of Insulating and Insulating Structure"

The present invention relates to a method of insulating an area to reduce both thermal conductivity and the transfer of radiant heat, and to an insulating structure. The present invention in particular relates to specific polymeric materials which in conjunction with other materials as in the form of laminates provide a structure to insulate an area.

The art is replete with numerous polymeric materials used either alone or in combination with other materials to form thermal screens, e.g., US Pat. No. 3,730,891 (heat insulating PVC film is prepared by treating PVC resin or copolymer with anhydrous silica, plasticizer and stabilizer), US Pat. No. 4,076,889 (heat insulating material produced by applying a metal to one surface of a film of polyfluoroolefin or fluoroolefin copolymer). Of course, foamed polyurethane is among the best known and widely used insulating materials. Various other polymeric materials, both foamed and unfoamed, transluscent and opaque, alone and laminated have been similarly employed.

Specific polymers employed herein are poly (iminoimidazolidinedione) and poly(parabanic acid) resins. Both the poly(iminoimidazolidinediones) and poly(parabanic acids) and their methods of preparation are known from e.g., my commonly assigned U.S. Pat. No. 3,661,859. The poly (parabanic acids) may also be prepared by other processes, such as shown in U.S. Pat. No. 3,609,113.

The poly(iminoimidazolidinediones) may be formed by the reaction of hydrogen cyanide with a diisocyanate or mixture of diisocynates, the reaction of a dicyanoformamide with a diisocyanate or mixtures of diisocyanates, or the polymerization of a cyanoformamidyl isocyanate and contain a 1,3-imidazolidinedione-1, 3-diyl ring of the following structures in the repeating units:

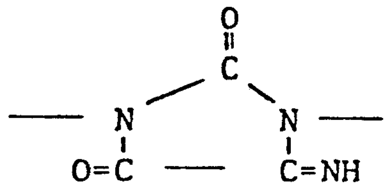 and/or 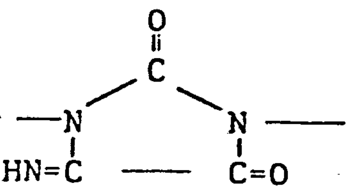

wherein NH is in the 4 or 5 position.

The poly(parabanic acids) also designated as poly(1,3imidazolidine-2,4,5-triones) may be prepared, for example, by the acid hydrolysis of poly(iminoimidazolidinediones) and contain the imidazolidinetrione ring in the repeating unit:

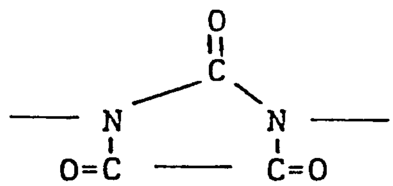

U.S. Pat. No. 3,609,113 and German Patent No. 1,770,146 describe other methods for preparing polymers which contain the poly(parabanic acid) ring.

The polymers may contain both imino-1,3-imidazolidinedione-1,3-diyl rings and imidazolidinetrione rings, thus the present polymers may be broadly characterized as having the repeating unit:

$$-\left[Q - R\right]_n-$$

wherein Q is

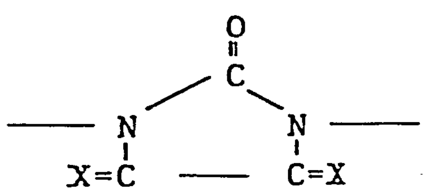

wherein X is O or NH, provided that at least one X is O, R is an organic moiety which may be aliphatic, alicyclic, aromatic or mixtures thereof, and n is sufficiently large to produce a solid product.

The R is the organic moiety of the diisocyanate when the polymer is produced according to the procedure in U.S. Pat. No. 3,661,859. Thus, the diisocyanates may be selected from a broad group having a large variety of organic moieties. The organic

moieties of the diisocyanate may be substituted with groups such as alkyl, aryl, halogens, sulfoxy, sulfonyl, alkoxy, aryloxy, oxo, ester, alkylthio, arylthio, nitro and the like which do not react with the isocyanate group. Functional groups which have active hydrogen atoms, (e.g., carboxylic acids, phenols, amines, etc.) should not be present. Specific diisocyanates which may be used are set out in US Pat. No. 3,661,859, other patents, articles or organic textbooks as known in the art.

Some of the parabanic acid polymers have been found to have high glass transition temperatures, and thus are especially suitable as magnetic tapes (where good dimensional stability at high temperatures is required), films for use in flexible printed circuits, cable wraps, etc., for fibers such as tire cord fibers (where tensile strength and modulus are required), for moldings for electrical connectors, bearings, magnetic wire insulation, coatings for cables, cookware, glass fabrics, industrial belts (where high temperatures are required) and the like.

In addition to having excellent thermal and physical properties, the films made from the polymers have the advantage of providing thermal and radiant insulation. These and other advantages and features of the present invention will become obvious from the following description.

The present invention relates to an insulating structure comprising a film of non-cellular polymer as described below, contiguous to a second material adjacent to said area, the second material preferably being glass, wood, metal, paper, asbestos or a polymeric material. The structure may be in the form of a laminate. The films are translucent and may be substantially clear. The invention also provides a method of thermally insulating an area comprising positioning adjacent to the area a thermal barrier comprising a structure of the invention

As the term "thermally insulating an area"

is used herein, it is understood to mean that the structure of the defined polymer and second material present a thermal barrier at least 10% greater than the second material alone. A thermal barrier as that term is used herein means an impediment to the transfer or transmission of heat.

The structure of the defined polymer and second material may entirely enclose an area or may separate a first area from a second area such that the two areas communicate around the structure, in which event it may be considered that either area is insulated.

The non-cellular film comprises heterocyclic polymers characterized in the repeating unit by the tri-substituted 1,3-imidazolidine-1,3-diyl ring:

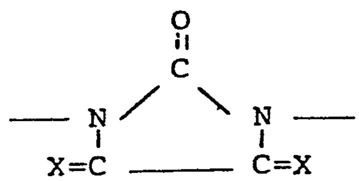

wherein X = O or NH, provided at least one X is O or more especially polymers having the repeating unit:

$$-\left[ Q - R \right]_n-$$

wherein Q is

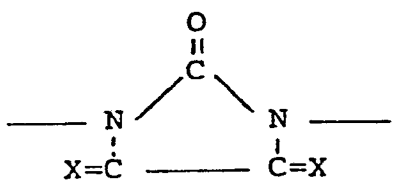

and X has the significance set out above, R is an organic moiety which may be aliphatic, alicyclic, aromatic or mixtures thereof and n is sufficiently large to produce a solid product.

More particularly, the polymers may be poly (iminoimidazolidines) characterized by a tri-substituted 1,3-imidazolidine-1,3-diyl ring of the following structure:

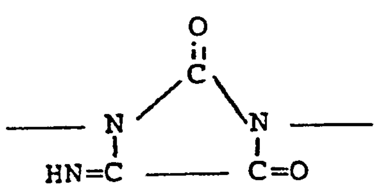 or 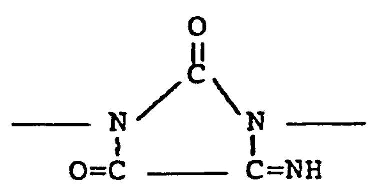 ,

poly(parabanic acids) characterized by a tri-substituted 1,3-imidazolidine-1,3-diyl ring of the following structure:

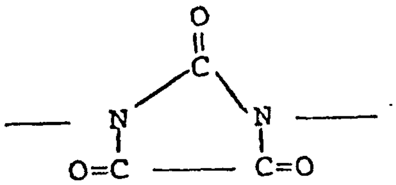,

or more specifically, polymers of the general structure:

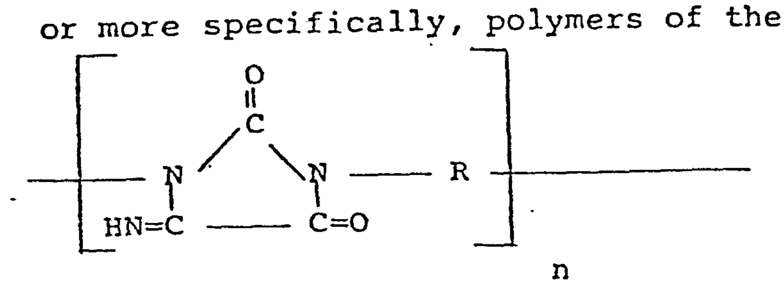 or

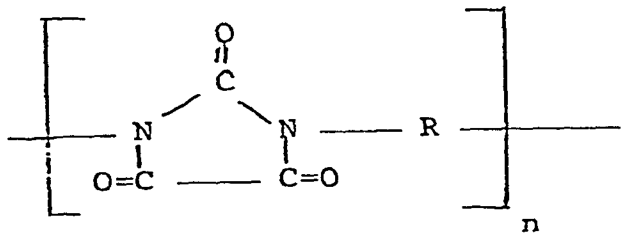 respectively,

wherein R and n have the significance given above.

The group R may be an aliphatic hydrocarbon moiety such as a tetramethylene, hexamethylene, decamethylene or 2,2,4-trimethyl-hexamethylene group, an aromatic hydrocarbon moiety such as a m-phenylene, p-phenylene, biphenylene or 1,5-naphthalene group or an alicyclic hydrocarbon moiety such as a cyclohexane group. Other examples of the group R include toluene, durene, 4,4'-diphenylmethane 3,3'-dimethyl-4,4'-biphenylene, 4,4'-diphenylisopropylidene, p-xylylene, m-xylylene, 4,4'-methylene-bis-cyclohexyl, 4-cyclohexyl-phenyl or benzyl groups. The group R may be substituted and examples of substituted moieties include the 4,4'-diphenylsulphone, 4,4'-diphenylether, 3,3'-dimethoxy-4,4'-biphenylene, dipropylether, isophorone, tetrafluoro-p-phenylene and 4,4'-octafluoro-biphenyl groups. Preferred groups R include the methylenediphenyl and oxydiphenyl groups. R may also represent a mixture of groups, and preferably a mixture of methylenediphenyl and 2,4-tolylenediyl groups or a mixture of diphenyl and bitolylenediyl groups.

The structure may comprise the defined polymer film and any other material or substrate, such as glass, wood, metal, such as steel, copper or aluminum, paper, asbestos, other polymeric materials such as polyurethane,

polyvinyl chloride, polystyrene or the defined polymer, and the like which are used contiguous to said defined polymer and may consist of multiple layers of said other materials and said defined polymer. Laminates of the defined polymer to said other material are particularly preferred, although bonding the defined polymer to the other material is not essential to obtain the benefits of thermal and radiant heat insulation of the defined polymer films.

It has been found that thin films of the defined polymer will adhere by static attraction to a glass surface, such as a window pane. The attraction between the two materials forms a type of laminate, even though the two are not fixedly adhered together.

The Figure shows a defined polymer adhered to a glass plate.

Films of the defined polymer may be made by melt extrusion or by casting from solution both of which are described in the prior art. Both methods provide the means for readily bonding the defined polymer to a substrate such as glass for the formation of a laminate.

The solvent which may be employed from which the poly(parabanic acid) or precursor as defined above may be cast are moderate hydrogen bonding, aprotic solvents. The preferred solvents are N, N-dimethylformamide, N-methylpyrrolidone, N,N-dimethylacetamide and dimethyl sulfoxide.

The film may be cast onto glass and some degree of adhesion will be obtained.

In any event, the film is cast from solution in the conventional manner. Such cast film may be adhered, if desired, to the second material with conventional adhesives such as solvent solutions of tacky materials. The static properties of the film may also be employed to adhere and hold the film to second material, such as glass.

Extruded films of PPA polymers may also be employed. In order to successfully extrude the present polymers, it is necessary to plasticize them, since many of the present PPA polymers decompose when heated above their glass transition temperatures. Several types of plasticizer have

been evaluated and variously disclosed for this purpose. One such group of plasticizers is aromatic nitriles; see European patent application, Serial No. 81302519.4 published December 16, 1981 under No. 0041852. Isophthalonitrile and phthalonitrile are particularly preferred among this group.

The extruded film may be extruded onto the second material, such as glass, or extruded conventionally and merely juxtaposed to the second material, with or without adhesive bonding.

Normally, 10 to 50 wt. percent, more preferably up to 30 wt.%, of the plasticizer will be employed, although lower (5 wt.%) and higher (60 wt.%) amounts, all based on the weight of polymer, may be used. The polymer and plasticizer blends are easily obtained by dry mixing powders of each (when the plasticizer is a solid) and forming a melt. The heating and extrusion may also be carried out in conventional equipment.

The thickness of the non-cellular film would be at least 5 mils up to 10 mils (0.127 to 0.254 mm); although thicker films could be employed, the benefit to be derived would not be economical.

The effectiveness of the film of the defined polymer as insulating material may be further increased by coating a layer of aluminum thereon as described, for example, in U.S. Patent No.'s 3,942,135 and 4,081,300.

The Figure shows a glass plate 11 to which is bonded a film of PPA-M, clear, non-cellular film 10, which provides a radiant heat barrier.

EXAMPLES

For purposes of illustration, the examples will be described with respect to a particular polymer, that is, a polyparabanic acid prepared from diphenylmethane diisocyanate to result in a high performance polymer having the repeating unit show below:

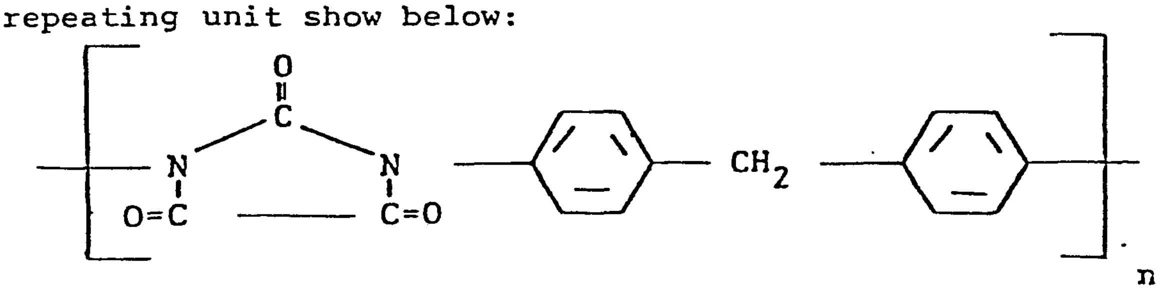

which is also designated as poly[1,4-phenylenemethylene-1,4-phenylene-1,3-(imidazolidine-2,4,5-trione)] which is also designated in chemical abstracts as poly [(2,4,5-trioxo-1,3-imidazolidinediyl)-1,4-phenylenemethylene-1,4-phenylene] . It has a high glass transition temperature of about 290°C and can not be extruded or molded by conventional techniques.

For purposes of convenience, this polymer species will be referred to as PPA-M.

In general, the preferred polymers of the polymer-plasticizer compositions are those which have sufficient repeating units at room temperature to be solids.

In addition to the polymer and plasticizers, it is contemplated that other appropriate additives which are not detrimental to the compositions such as those employed to stabilize against oxidation or ultraviolet light, flame retardants, pigments, fillers and the like may be present.

The following example illustrates the present invention:

EXAMPLE

The non-cellular polymer films were evaluated for their effectiveness as insulation to radiant energy and thermal conductivity.

EVALUATION A: RADIANT HEAT

Four boxes were constructed from 1" (25.4mm) thick rigid polyurethane foam which had a thermal conductivity of 0.14 (BTU) (in.)/(hr)($ft^2$)(°F)(0.02 $Wm^{-1}°C^{-1}$) and a density of 0.032g./cc. The inside dimensions were 6" (152.4mm) wide, 12" (304.8mm) long, and 6" (152.4mm) high. All edges of the boxes were sealed with aluminium duct tape. A 250°F (121°C) thermometer was inserted through the side of each box and positioned so that the mercury bulb was in the center of the box.

The tops of the boxes were sealed on with duct tape. The tops were made of glass, glass coated with clear PPA-M film, and 1" (25.4mm) thick rigid polyurethane foam as described.

The boxes were mounted on a board adjacent to each other and placed in the direct sunlight on the roof of a building. The temperature inside each box was recorded

at various times throughout the day. The results of this evaluation are reported in Table I.

EVALUATION B: THERMAL CONDUCTIVITY

The thermal conductivities of two PPA-M films were determined by placing the film (17 mm diameter) between polished silver plates which could be kept at the given boiling points of two liquids by a constant supply of heat to the higher boiling point liquid. When steady equilibrium was attained, the lower boiling point liquid vaporized at a constant rate and was condensed and collected in a measuring vessel. The time for a given volume to distill was measured and the thermal conductivity was calculated. The Colora Thermo-conductometer was used to make the measurements.

The results of this evaluation are reported in Table II.

TABLE 1

A. RADIANT HEAT EVALUATIONS

| Example | 1 | | 2 | | 3 | | 4 | |
|---|---|---|---|---|---|---|---|---|
| | | | Poly U | | Clear PPA-M Film on Glass(a) | | | |
| Box Cover: | Glass | | Foam(b) | | 0.005"(0.122mm) thick | | 0.002"(0.51mm) thick | |
| Time of Day | °F | °C | °F | °C | °F | °C | °F | °C |
| 8.05 am | 82 | 28 | 82 | 28 | 82 | 28 | 82 | 28 |
| 9.35 am | 133 | 56 | 100 | 38 | 118 | 48 | 128 | 53 |
| 11.15 am | 168 | 76 | 114 | 46 | 149 | 65 | 165 | 74 |
| 1.15 pm | 180 | 82 | 118 | 48 | 158 | 70 | 178 | 81 |
| 3.15 pm | 168 | 76 | 118 | 48 | 146 | 63 | 169 | 76 |

| Example | 5 | | 6 | | 7 | |
|---|---|---|---|---|---|---|
| | | | Poly U | | Clear | |
| Box Cover: | Glass | | Foam(b) | | PPA-M(c) | |
| Time of Day | °F | °C | °F | °C | °F | °C |
| 9.10 am | 85 | 29 | 85 | 29 | 85 | 29 |
| 10.30 am | 164 | 73 | 122 | 50 | 148 | 64 |
| 1.10 pm | 182 | 83 | 122 | 50 | 160 | 71 |
| 4.00 pm | 158 | 70 | 120 | 49 | 145 | 63 |
| 4.30 pm | 149 | 65 | 117 | 47 | 136 | 58 |

(a) The PPA-M film was affixed to the glass by tape on the edges.
(b) Rigid polyurethane foam, 1"(25.4mm) thick.
(c) Clear PPA-M film, 0.005"(0.127mm) thick, alone.

TABLE II

B. THERMAL CONDUCTIVITY EVALUATION

| Example | Thickness[a] | density | Thermal Conductivity $Wm^{1}deg\ C^{-1}$[b] | (BTU)(in)/(hr)(ft$^{2}$)(°F)[c] |
|---|---|---|---|---|
| 8 | 0.0025 in (0.064mm) | 1.28 g/cc | 0.28 | 1.9 |
| 9 | 0.005 in | 1.36 g/cc | 0.28 | 1.9 |

(a) The films were clear PPA-M

(b) Thermal conductivity expressed in S.I. (Systems International d'Unites) units; W = watts, m = meter.

(c) Thermal conductivity expressed in British Thermal Units.

CLAIMS

1 A thermal insulating structure comprising a non-cellular film of heterocyclic polymers characterized by the tri-substituted 1,3-imidazolidine-1,3-diyl ring:

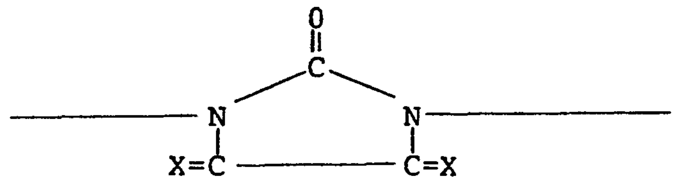

(wherein X = 0 or NH, provided at least one X is 0) contiguous with a second material.

2 A thermal insulating structure according to claim 1, in which the heterocyclic polymers have the repeating unit:

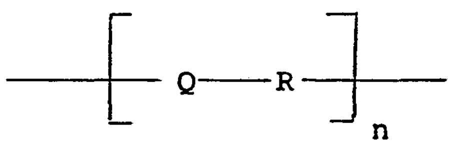

wherein Q is

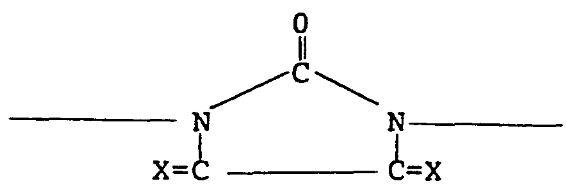

X = 0 or NH, provided at least one X is 0, R is an organic moiety which my be aliphatic, alicyclic, aromatic or mixtures thereof and n is sufficiently large to produce a solid product.

3 An insulating structure according to claim 2 in which the polymer has the structure:

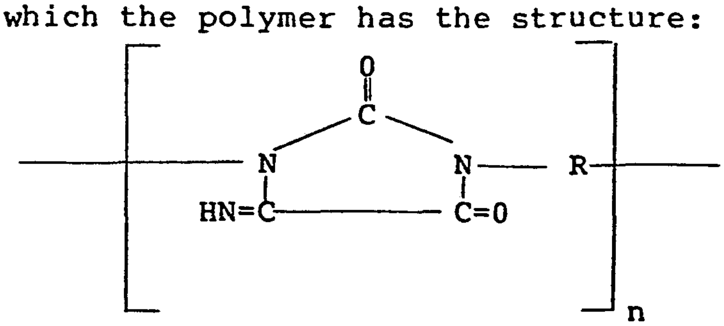

4 An insulating structure according to claim 2, in which the polymer has the structure:

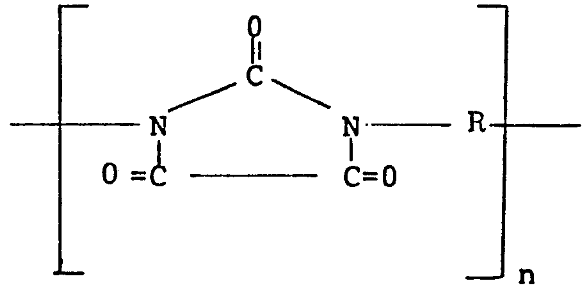

5 An insulating structure according to any of claims 2 to 4, in which the R group is methylenediphenyl.

6 An insulating structure according to any of claims 2 to 4, in which the R group is oxydiphenyl.

7 An insulating structure according to any of claims 2 to 4, in which the R group is a mixture of methylenediphenyl and 2,-4-tolylenediyl groups.

8 An insulating structure according to any of claims 1 to 7, in which the film is bonded to the second material to form a laminate.

9 An insulating structure according to any of claims 1 to 8, in which the second material is glass, wood, metal, paper, asbestos or a polymeric material.

10 An insulating structure according to any of claims 1 to 9, in which the film is from 0.127mm to 0.254mm thick.

11 A method of thermally insulating an area, characterized by positioning adjacent thereto a structure according to any of claims 1 to 10.

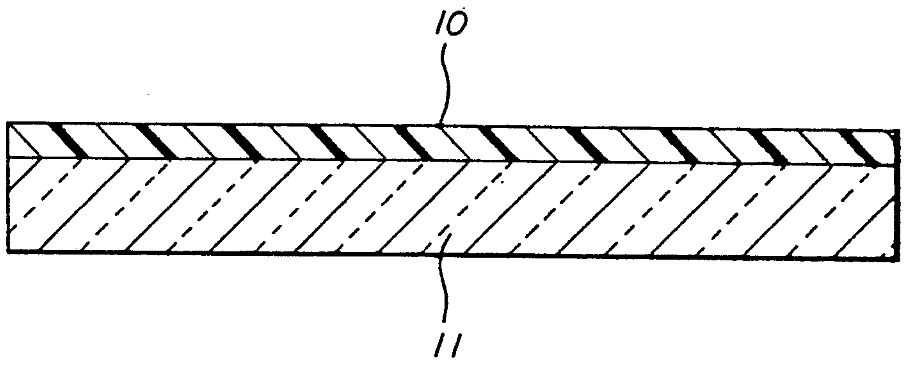
10
11